# EUROPEAN PATENT SPECIFICATION

(11) **EP 1 038 779 B1**
(45) Date of publication and mention of the grant of the patent: **28.07.2004**
(21) Application number: 99830173.3
(22) Date of filing: 25.03.1999
(51) Int. Cl.: B65B 51/30, B29C 65/18

(54) **Rotatable jaw, for instance for packaging machines**
Drehbare Backe, zum Beispiel für Verpackungsmaschinen
Mâchoire rotative, par exemple pour machines d'emballage

(43) Date of publication of application: 27.09.2000
(73) Proprietor: CAVANNA S.p.A., I-28077 Prato Sesia Novara (IT)
(72) Inventor: Guidetti, Dario, 28075 Grignasco (Novara) (IT)
(74) Representative: Bosotti, Luciano

(56) References cited:
- EP-A- 0 738 582
- EP-A- 0 779 146
- GB-A- 1 072 287
- US-A- 3 850 780
- US-A- 3 943 686

## Description

The present invention relates to a machine with a rotatable jaw, and concerns, more specifically, a machine according to the preamble of Claim 1.

Machines of this type, known, for example, from US Patent US-A-3 850 780, after which the preamble of Claim 1 was patterned are used in packaging assemblies of the type commonly known as flow-pack or form-fill-seal or, for short, "ffs". In such packaging assemblies, the articles to be packaged are fed in an ordered sequence into a sheet packaging material (film), previously shaped into a tube by means of a special shaping device and closed along a longitudinal sealing line. The assembly thus formed is then made to advance towards one or more machines with rotatable jaws, each preferably comprising at least two jaws, movable in opposite but coordinated orbits, synchronized with the forward movement of the tubular packaging enclosing the articles. The movement of the jaws is adjusted in such a way that the jaws themselves close on the tubular package at the spaces separating the articles, thereby squashing the package itself. At the same time, the packaging is heat sealed, so as to transform the continuous tubular casing into a chain of cells housing separate articles. This heat sealing operation is accompanied by, or followed by an operation to cut the packaging so that the said cells are transformed into respective separate packages (if the two operations are simultaneous they are carried out in the same machine, if separate, the cutting is carried out in a structurally identical machine arranged in series with the first). In a method which is even more preferable, machines with a rotatable jaw of the type described above, include two pairs of jaws, each pair comprising two diametrically opposite elements carried by a respective rotatable structure: the above providing two successive cycles of cooperation between opposing jaws for each 360° rotation of the rotatable structures.

The arrangement described in US-A-3 850 780 tackles the problem of ensuring that the jaws which are designed to act each time on opposite positions on the packaging material are able to remain in cooperation, holding the material between them, for longer than the contact interval - virtually an instant - which would occur if the two jaws followed exactly circular orbital paths, tangential to each other. To this end, the arrangement described in US-A-3 850 780, provides each jaw with associated guide means, constituted essentially by a pair of rollers, on each side of the jaw, which run in a groove formed in a side element of the machine, positioned facing the region within which the jaw moves. The arrangement also provides for the jaw to be capable of some radial movement, relative to the rotating structure which drives its orbital movement about a central axis: in practice, a movement approaching towards and moving away from the said axis. The shape of the said groove, which acts as a cam, is designed in such a way that the jaw follows a substantially circular path, except in the area where the cooperation with the packaging material and with the complementary jaw takes place. In this area, the groove defines a rectilinear path which is substantially chordal of the circular orbit followed by the jaw in the other parts of its path of motion. Running along this rectilinear portion of the groove, the rollers guide the jaw in a rectilinear path. This arrangement, adopted symmetrically for the complementary jaw, ensures that the two jaws close on the packaging material at the start of the said rectilinear portion of their path of motion and remain in this condition, following the packaging in its advance with no relative motion, for the entire period it takes the jaws to cover the said rectilinear portion of tne path. During this period, the operations of squeezing, sealing and, if required, cutting the packaging are carried out, after which the two jaws move away from each other once again, releasing the packaging and preparing to complete the remaining portion of their path.

While they are passing along the said rectilinear portion the path, the jaws are subjected to stress resulting from the superimposition of two force components.

A first component acts essentially in the direction of advance and corresponds to the driving force which the rotating structure on which each jaw is mounted exerts on the jaw itself so that it advances with the package.

A second component, acting in a direction orthogonal to the preceding one (and thus orthogonal to the rectilinear path of advance), corresponds to the stress exerted on the jaw in order for it to press against the packaging material.

Three parameters among those which regulate the mechanism which welds the packaging material (a mechanism which usually involves the local heat-sealing of the material itself) play a crucial role. These are:
- the length of the interval during which the jaw acts on the packaging material,
- the temperature of the jaw, and
- the pressure that the jaw exerts on the packaging material.

In recent times, there has been a growing tendency to use packaging materials (film) which require the jaw to apply a high pressure in order to operate in optimum conditions.

In conventional arrangements, in particular those based on US-A-3 850 780, the pressure that the jaw is able to exert is directly linked to the reaction of the rollers guiding the movement thereof along the walls of the groove acting as a cam, in particular against the surface of the rectilinear portion of the groove arranged in an inner position in the area of action of the jaw. The choice of operating at high pressure on the packaging material involves a corresponding reactive stress on the bearings and on the wall of the groove against which these latter are bearing. The ensuing wear is detrimental, both with regard to the useful life of the bearings (which need to be replaced frequently, as a result also of the operating speeds of the machine, which tend to grow faster and faster as machines are built with ever increasing production rates) and also because, even before it reaches levels requiring that the bearings be replaced, the aforesaid wear results in increased play between the jaw and the packaging material. The thinner the packaging material, the more serious are the consequences of this play.

The present invention seeks to provide a machine with jaws of the type described above, in which the aforesaid problems have been overcome, thus providing a machine able to operate at high pressure even on very thin packaging material.

This is achieved, according to the invention, by providing a machine with the characteristics claimed in the Claims which follow.

In particular, in a particularly preferred embodiment, the machine of the invention enables the pressure with which the jaw acts on the packaging material to be adjusted with very high precision.

The invention will now be described, purely by way of non-limitative example, with reference to the appended drawings, in which:
Figure 1 is general perspective view of a part of a machine with a rotatable jaw according to the invention; and
Figure 2 is essentially a cross section taken on the line II-II of Figure 1, illustrating more generally the symmetrical structure of the machine.

It should first be noted that the description which follows refers to a machine with a rotatable jaw which includes two counter-rotating structures, each of which carries a pair of diametrically opposite jaws. This is to enable two jaws moving with coordinated complementary motions to have two successive cycles of interaction for each rotation of the said structures. The arrangement of the invention could, however, be applied to machines which includes any number of jaws, either to machines having a different number of jaws on each rotatable structure, or to a machine which could even have a single rotatable structure, carrying any number of jaws. In particular, the arrangement is also applicable - at least in principle - to a machine with a single jaw operable to interact with a sheet packaging material in pressing, sealing and, possibly, cutting cycles under conditions in which the bearing element on the other side of the material is not constituted by another jaw but simply a surface or any other structure along which the package may slide.

Moving on to illustrate the characteristics of the machine with a rotatable jaw indicated 1 in the appended drawings, it should first be noted that - in its more general aspects - the machine of the invention follows the arrangement described in US-A-3 580 780. The description relating to this is therefore not repeated here, both because it covers known elements, and because it is not essential to the understanding of the embodiment of the invention.

The machine 1 is intended to be fitted, according to criteria known in the art, into a system for packaging articles A (typically food products such as confectionery) which operates according to technology known as "flow-pack", "form-fill-seal" or "ffs".

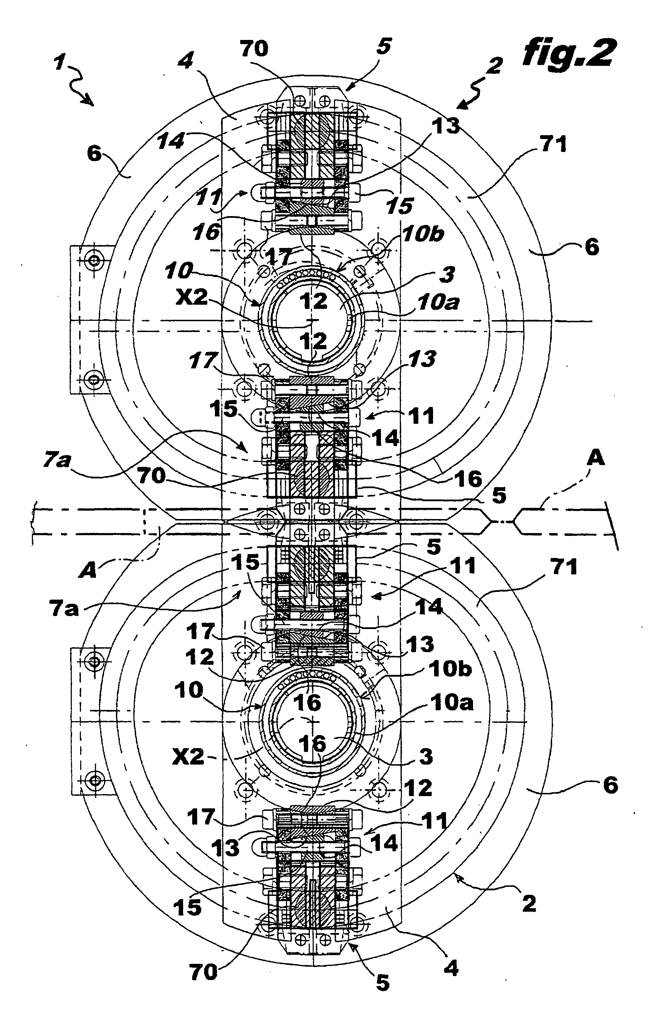

Essentially, the machine 1 comprises two counter-rotatable structures 2, mounted for rotation about respective axes X2 extending horizontally one above and one below the, generally horizontal, path of the articles A. This path is schematically illustrated by a broken line in Figure 2. The axes X2 extend transverse the said path and usually are constituted by respective shafts 3, driven to rotate (anticlockwise for the upper shaft 3 and clockwise for the lower respectively) by corresponding motor means, which are not illustrated.

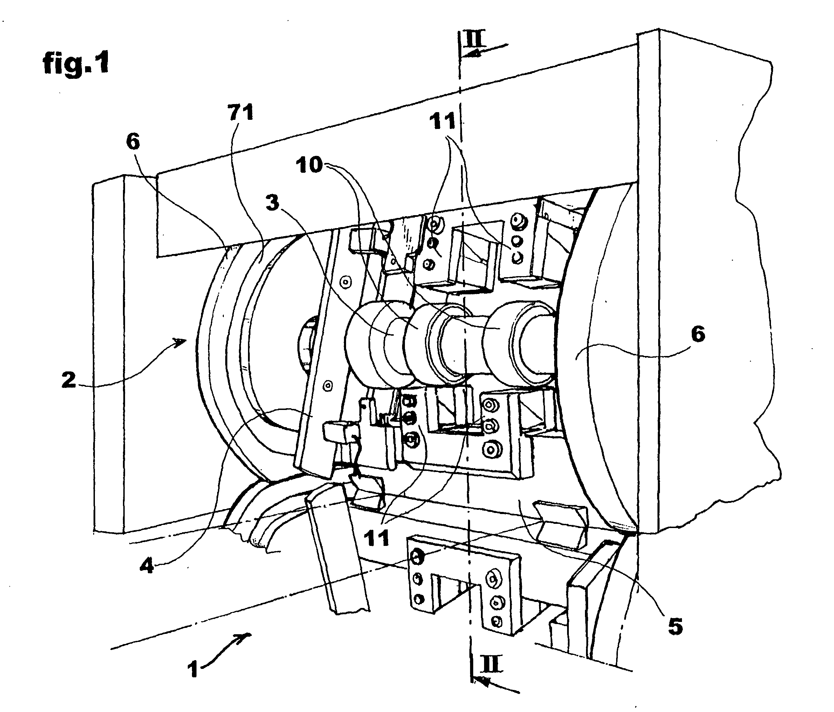

As may be seen better in the perspective view of Figure 1 (which shows, essentially, the portion of the machine above the path of the articles A), each shaft 3 carries two bracket structures 4 mounted at the ends of the shaft 3 for rotation therewith, extending diametrically of the shaft 3 and aligned with one another.

The two bracket structures 4 can support two respective jaws 5, arranged in diametrically opposite positions which, upon rotation of the shafts 3, follow respective orbital paths about the axes X2.

More precisely, each jaw 5 is mounted by one of its two ends on a respective arm of one of the bracket structures 4. Each bracket structure 4 is disposed adjacent a respective plate 6 which acts as side support for the structure 2, and in particular for the shaft 3. Each structure 4 comprises two opposing arms, each being generally fork shape (this is best seen in the perspective view of Figure 1). This conformation enables the respective end of each jaw 5, and thus each jaw as a whole, to move radially towards and away from the axis X2.

At least one bearing 70 (or another similar projecting formation operable to act as a follower member) guides the aforesaid movement, being operable to slidably engage a groove 71 formed in the face of the plate 6 facing the structure 2. The grooves 71 are mirror images of one another in relation to the longitudinal, vertical median plane of the machine, each following an approximately circular path, except along one portion (indicated 7a) corresponding to that part of the path along which the jaws 5 carried by the two structures 2 (the movements of which are coordinated and synchronized, for example as a result of mechanical or electrically controlled coupling of the two shafts 3) approach each other, one descending and the other ascending, in order to cooperate with the packaging sheet used to pack the articles A.

The said rotational movement of the structures 2 is controlled in such a way that, when a jaw 5 carried by the structure 2 in a higher position gradually moves down towards the packaging sheet, a corresponding jaw 5 carried by the structure 2 in a lower position also moves towards the packaging, rising towards the plane on which the latter slides. The said movement continues until the jaws 5 are in a position clamped against each other with the packaging material between them, thereby squashing it.

The thus-coupled jaws 5 advance synchronously with the packaging material, applying thereto a combination of heat and pressure designed to cause local fusion of the material, thereby sealing it. The heat is supplied by heating elements such as resistors, not specifically illustrated in the drawings, mounted inside the jaws. In one or both of the jaws 5 there may also be a blade - not explicitly shown in the drawings - provided to cut the sealed packaging material thereby separating the packaging into individual packages containing the articles A.

Everything so far described corresponds in fact to elements and characteristics known in the art and thus not requiring a more detailed explanation here. The two rotatable structures 2 are altogether identical and have characteristics of specular symmetry relative to the plane of advance of the articles A. This structural identity preferably applies also to the characteristic elements of the invention. For this reason, hereinafter in this description reference will be made explicitly to characteristics found in one of the rotatable structures 2, in particular in that occupying the upper position, which is seen better in Figure 1. This assumes that the said characteristics are repeated identically, or substantially identically, in the other structure 2.

In detail, the reference number 10 indicates one or more (typically two) collar formations mounted on the shaft 3 in a position generally interposed between the bracket elements 4.

In the perspective view of Figure 1, it is possible to see, outwardly of the collar formations indicated 10, two generally similar additional collar structures. These additional collar structures form part of the means for operating the cutting blades referred to earlier and will not, therefore, be taken into further consideration here.

The collar structures 10 may be constituted simply by annular bodies (with an open structure, for example, constituted by two arcs connected so as to form a ring), or - according to the currently preferred embodiment of the invention - by ball bearings. In particular, the said bearings are arranged with their inner bearing ring 10a fitted on the respective shaft 3 and the outer surface of their outer bearing ring 10b forming a sleeve for cooperating in a thrust relationship with a corresponding assembly 11 mounted on one of the jaws 5.

The embodiment illustrated calls for two bearings 10: each jaw 5 therefore has a pair of assemblies 11 on its inner surface, opposite the region intended to interact with the sheet material.

The radial extent of the assemblies 11 (the adjective radial referring, of course, to the axis X2 about which the jaws 5 move in orbital paths) is chosen in accordance with the paths of the grooves 71 and with the dimension of the outer diameters of the bearings 10 (in practice, the radius of the surface of the outer sleeve 10b, also with reference to the axis X2) in such a way that:
- as each jaw 5 passes around the circular portion of its orbital path (driven by a respective arm of a bracket element 4 and subject to the effect of the bearings 70 which regulate the radial distance from the axis X2 as they slide in the grooves 71), the respective assemblies 11 are spaced from the outer surface of the outer sleeve 10b of the bearings 10, and
- when, on the other hand (still under the action of the said drive elements which regulate the angular position with respect to the axis X2), each jaw 5 passes along the rectilinear portion 7a of its path, where it cooperates with the sheet material, the radially inner ends of the assemblies 11, with respect to the axis X2, come into contact with the outer sleeve 10b of the bearings 10.

When this second operating condition is met, the forces which press each jaw 5 towards the axis X2 (forces which correspond to a reaction to pressure exerted by the jaw 5 against the packaging material) tend to bear - through the assemblies 11-on the outer sleeves 10b of the bearings 10 and thus directly on the shaft 3.

The reactive force which may be exerted on the bearings 70 and on the inner walls of the grooves 71 is thus significantly reduced, meaning that the said bearings and walls are practically free of any such stress.

In the embodiment of the invention which is currently preferred, means are provided for accurately regulating the extension of the assemblies 11 (as measured radially relative to the axis X2). This is carried out in such a way that, when the jaw 5 begins to pass along the rectilinear portion 7a of its path, the cooperation between the assemblies 11 and the bearings 10 induces the bearings 70 to disengage from the inner walls of the grooves 71. The term "induces" has been used owing to the limited tolerance involved and owing to the fact that the bearings 70 generally continue to cooperate with the walls of the grooves 71 so as to maintain the jaw 5 in its correct orientation. The aforesaid regulating action also makes it possible to adjust with accuracy the pressure which the jaws exert on the packaging material, even in the case of very thin materials.

One very simple embodiment of the arrangement described here is shown in the appended drawings, where the reference number 12 indicates a shoe formation, constituting, in effect, the inner radial portion of each assembly 11, which can extend, with a substantially flat head area, towards the outer sleeve 10b of the bearings 10.

Each shoe 12 is mounted within the body of a respective assembly 11 (which is preferably a tubular or cage structure) with at least a slight ability to slide longitudinally with respect to the assembly 11 itself. In addition, on its inner end relative to the assembly 11, each shoe 12 has a further flat surface 13, which is generally inclined both radially of the axis X2 and tangentially to the same axis.

An adjustment unit 14 is mounted inside the assembly 11, capable of a generally transverse movement, with respect to the said assembly 11, for example under the action of an adjuster screw 15, and having an inclined surface 16 which is complementary with the surface 13 of the shoe 12 and cooperates therewith.

By acting on the screw 15 it is possible to adjust with precision the position of the shoe 12, in order to achieve the result described above micrometrically. It is preferable for the shoe 12 to be locked with respect to the assembly 11, by acting on a corresponding locking screw 17. However, it is clear that this same micrometric adjustment result can be achieved with other, functionally equivalent means to those described here.

The arrangement which involves the collar formations 10 being constituted by ball bearings is to be preferred as it makes it possible to achieve relative rotational movement of the inner and outer surfaces of each collar formation 10, with the minimum friction; these surfaces being constituted, in the example illustrated by way of example, by the inner bearing ring 10a and outer bearing ring 10b of each bearing 10.

This possibility of relative movement has to take into account the fact that, when the jaws 5 are passing through the rectilinear portion 7a of their path, the radial distance of the jaw 5 from the axis X2 varies (first decreasing and then increasing once again), which corresponds - for the same angular velocity - to a variation in the tangential velocity of every point of the jaw 5, and thus also of the assembly 11 and the shoe 12 relative to the axis X2.

This is easily understood, with reference also to Figure 2, if it is remembered that - in the case for example of a jaw 5 mounted on the structure 2 in the upper position - the shoes 12 initially engage the surface 10a of the outer sleeve with their right end (with reference, of course, to the viewpoint of Figure 2), advancing gradually beneath the shaft 3 until reaching the position of central, vertical alignment shown in Figure 2 and then continuing to advance rightwards until the left end of the shoe disengages the outer sleeve 10b, the opposite end, that is, to that which first engaged the surface 10b. Since the shoes 12 cooperate in a thrust relationship (in a radial direction with respect to the axis X2) with the outer sleeves 10b, it is clear that the outer bearing rings of the bearings 10, which define the said outer sleeves, will tend to follow the shoes 12 with which they are cooperating at any one moment, meaning that their tangential velocity is also subject to modulation. In the absence of the interaction with the shoes 12, this tangential velocity tends, on the other hand, to remain constant, at the value of the angular velocity imparted by the shafts 3 and by the radius of the surfaces 10b.

This possibility of movement of the outer sleeve 10b relative to the inner bearing ring 10a, which is usually fixed for rotation with the shaft 3, makes it possible to take into account the effect of modulating the tangential velocity of the jaw 5, which is transferred to the surface of the sleeve 10b during thrust interaction with the assembly 11.

The extent of this speed modulation is generally limited, meaning that when the cooperating surfaces are generally smooth, the option of making the formations 10 as solid collar bodies (possibly as portions of the shaft 3) rather than bearings, becomes a possible choice, although it is not the preferred solution as it can give rise, during cooperation for the transmission of thrust, to tangential sliding movement (relative to the axis X2) between the surfaces of the shoes 12 and the surfaces of the outer sleeve 10b.

Naturally, while the principle of the invention remains unaltered, the manufacturing details and embodiments may vary widely from those described and illustrated here, without departing thereby from the scope of the invention, as claimed in the appended Claims.

## Claims

1. A machine with a rotatable jaw which includes at least one jaw (5) operable to move along an orbital path about a respective axis (X2), the said jaw (5) carrying associated guide means (70,71) operable to guide the jaw (5) along at least one rectilinear portion (7a) of the said path, orientated in a generally chordal direction with respect to the said axis (X2), in which the said jaw (5) is able to cooperate with at least one engagement element (A) in a pressure-transmitting relationship able to induce corresponding reaction forces on the jaw (5), at least one collar formation (10) is provided with a respective outer sleeve (10b) extending about the said axis (X2) and at least one assembly (11) is associated with the said jaw (5), extending away from the said engagement element (A), **characterised in that** the said at least one assembly (11) being able to cooperate in a thrust relationship with the said sleeve (10b) when the said jaw (5) passes through the said rectilinear portion (7a) of its orbital path, whereby the said reaction forces which press said jaw (5) towards said axis (X2) are mainly transmitted to the outer sleeve of the said collar formation (10) by means of the said assembly (11), while the said guide means (70,71) are substantially unaffected by said reaction forces.

2. A machine according to Claim 1, **characterised in that** it includes a support structure (2) on which the said at least one jaw (5) is rotatable, the said structure comprising a respective main shaft (3) aligned with the said axis (X2) and **in that** the said at least one collar formation (10) is mounted on the said shaft (3).

3. A machine according to Claim 1 or Claim 2, **characterised in that** the said at least one assembly (11) has associated means (12 to 17) for selectively adjusting the radial extent of the assembly (11) with respect to the axis (X2).

4. A machine according to Claim 3, **characterised in that** the said adjustment means (12 to 17) include two elements (12,14) which cooperate with each other in a generally ramp-like arrangement (13,16).

5. A machine according to Claim 3 or Claim 4, **characterised in that** the said assembly (11) includes a shoe element (12) which can cooperate with the said outer sleeve (10b), the said shoe element (12) being selectively translatable (15,17) with respect to the remaining parts of the said assembly (11) .

6. A machine according to any preceding Claim, **characterised in that** the said collar formation (10) is constituted by a bearing which includes respective inner (10a) and outer (10b) bearing rings, the said outer bearing ring (10b) defining the said outer sleeve for cooperating with the said assembly (11) in the transmission of thrust.

7. A machine according to any preceding Claim, **characterised in that** the said at least one jaw (5) is arranged as a heat-sealing jaw for sheet packaging material.

8. A machine according to any preceding Claim, **characterised in that** it includes a pair of jaws (5) mounted (2) for respective orbital motion in diametrically opposite positions about the said axis (X2).

9. A machine according to any preceding Claim, **characterised in that** it includes a pair of counter-rotatable structures (2), each bearing at least one respective jaw (5) capable of the said orbital movement, coordinated with, and complementary to, that of at least one corresponding jaw (5) carried by the other rotatable structure (2) of the pair, whereby when each of the said jaws (5) passes along the rectilinear portion (7a) of its orbital path, its action on the engagement element (A) is concurrent and coordinated with that of the at least one corresponding jaw (5).

## Patentansprüche

1. Eine Maschine mit einer drehbaren Backe, welche zumindest eine Backe (5) umfaßt, die betätigbar ist, um entlang einer Umlaufbahn um eine jeweilige Achse (X2) bewegt zu werden, wobei die Backe (5) zugeordnete Führungsmittel (70, 71) trägt, welche betätigbar sind, die Backe (5) entlang mindestens eines gradlinigen Bereichs (7a) der Bahn zu führen, der allgemein in einer Sehnenrichtung bezüglich der Achse (X2) orientiert ist, wobei die Backe (5) mit mindestens einem Eingriffselement (A) in einer Druck übertragenden Beziehung zusammenwirken kann, welche es ermöglicht, entsprechende Reaktionskräfte auf die Backe (5) zu induzieren, und wobei mindestens eine Ringformation (10) mit einer jeweiligen äußeren Büchse (10b) versehen ist, die sich um die Achse (X2) erstreckt, und mindestens ein Aufbau (11) der Backe (5) zugeordnet ist, der sich von dem Eingriffselement (A) weg erstreckt, **dadurch gekennzeichnet, daß** der mindestens eine Aufbau (11) mit der Büchse (10b) in einer Stoßbeziehung zusammenwirken kann, wenn die Backe (5) den gradlinigen Bereich (7a) ihrer Umlaufbahn passiert, wobei die Reaktionskräfte, welche die Backe (5) in Richtung der Achse (X2) drücken, größtenteils auf die äußere Büchse der Ringformation (10) mittels des Aufbaus (11) übertragen werden, während die Führungsmittel (70, 71) im wesentlichen durch die Reaktionskräfte unbeeinträchtigt sind.

2. Eine Maschine nach Anspruch 1, **dadurch gekennzeichnet, daß** sie eine Trägerstruktur (2) enthält, an welcher die mindestens eine Backe (5) drehbar angeordnet ist, wobei die Struktur eine jeweilige Hauptwelle (3) umfaßt, die zu der Achse (X2) ausgerichtet ist, und daß die mindestens eine Ringformation (10) an der Welle (3) montiert ist.

3. Eine Maschine nach Anspruch 1 oder 2, **dadurch gekennzeichnet, daß** der mindestens eine Aufbau (11) zugeordnete Mittel (12 bis 17) aufweist, um die radiale Erstreckung des Aufbaus (11) bezüglich der Achse (X2) einzustellen.

4. Eine Maschine nach Anspruch 3, **dadurch gekennzeichnet, daß** die Einstellmittel (12 bis 17) zwei Elemente (12, 14) enthalten, die miteinander in einer im allgemeinen keilartigen Anordnung (13, 16) zusammenwirken.

5. Eine Maschine nach Anspruch 3 oder 4, **dadurch gekennzeichnet, daß** der Aufbau (11) ein Schuhelement (12) enthält, welches mit der äußeren Büchse (10b) zusammenwirken kann, wobei das Schuhelement (12) bezüglich der übrigen Teile (15, 17) des Aufbaus (11) selektiv übersetzbar ist.

6. Eine Maschine nach einem der vorhergehenden Ansprüche, **dadurch gekennzeichnet, daß** die Ringformation (10) als Lagerung ausgebildet ist, welche jeweilige innere (10a) und äußere (10b) Lagerringe umfaßt, wobei der äußere Lagerring (10b) die äußere Büchse definiert, um mit dem Aufbau (11) bei der Übertragung des Stoßes zusammenzuwirken.

7. Eine Maschine nach einem der vorhergehenden Ansprüche, **dadurch gekennzeichnet, daß** die mindestens eine Backe (5) in Form einer Heißsiegelbacke für bahnförmiges Verpackungsmaterial vorgesehen ist.

8. Eine Maschine nach einem der vorhergehenden Ansprüche, **dadurch gekennzeichnet, daß** sie ein paar Backen (5) enthält, die für die jeweilige Bahnbewegung ineinander genau gegenüberliegenden Positionen an der Achse (X2) montiert (2) sind.

9. Eine Maschine nach einem der vorhergehenden Ansprüche, **dadurch gekennzeichnet, daß** sie ein paar gegenläufig drehbare Strukturen (2) umfaßt, die jeweils mindestens eine entsprechende Backe (5) tragen, die fähig ist, die Bahnbewegung durchzuführen, welche mit der mindestens einen korrespondierenden Backe (5), die durch die andere drehbare Struktur (2) des Paares getragen wird, koordiniert und komplementär dazu ist, wodurch ihre Wirkung auf das Eingriffselement (A) gleichzeitig und koordiniert mit der Wirkung der mindestens einen korrespondieren Backe (5) ist, wenn sich jede der Backen (5) entlang des gradlinigen Bereichs (7a) ihrer Umlaufbahn bewegt.

## Revendications

1. Machine avec mâchoire rotative qui inclut au moins une mâchoire (5) pouvant être déplacée le long d'un chemin orbital autour d'un axe respectif (X2), ladite mâchoire (5) supportant les moyens de guidage associés (70, 71) permettant de guider la mâchoire (5) le long d'au moins une partie rectiligne (7a) dudit chemin, orientée dans une direction généralement chordale par rapport au dit axe (X2), dans lequel ladite mâchoire (5) peut coopérer avec au moins un élément d'engrènement (A) dans une relation de transmission de pression pouvant induire des forces de réaction correspondantes sur la mâchoire (5), au moins une formation de collier (10) est équipée d'un manchon extérieur respectif (10b) s'étendant autour dudit axe (X2) et au moins un ensemble (11) est associé à ladite mâchoire (5), en s'éloignant dudit élément d'engrènement (A), **caractérisé en ce que** ledit au moins un ensemble (11) peut coopérer dans une relation de poussée avec ledit manchon (10b) lorsque ladite mâchoire (5) traverse la partie rectiligne (7a) de son chemin orbital, par laquelle lesdites forces de réaction, qui compriment ladite mâchoire (5) vers ledit axe (X2), sont principalement transmises au manchon extérieur de ladite formation de collier (10) au moyen dudit ensemble (11), tandis que lesdits moyens de guidage (70, 71) sont sensiblement non affectés par lesdites forces de réaction.

2. Machine selon la revendication 1, **caractérisée en ce qu'**elle inclut une structure de support (2) sur laquelle ladite au moins une mâchoire (5) est rotative, ladite structure comprenant un arbre principal respectif (3) aligné avec ledit axe (X2) et **en ce que** ladite au moins une formation de collier (10) est montée sur ledit arbre (3).

3. Machine selon la revendication 1 ou 2, **caractérisée en ce que** ledit au moins un ensemble (11) comporte des moyens associés (12 à 17) pour régler de manière sélective l'étendue radiale de l'ensemble (11) par rapport à l'axe (X2).

4. Machine selon la revendication 3, **caractérisée en ce que** lesdits moyens de réglage (12 à 17) incluent deux éléments (12, 14) qui coopèrent l'un avec l'autre dans une installation généralement de type rampe (13, 16).

5. Machine selon la revendication 3 ou 4, **caractérisée en ce que** ledit ensemble (11) inclut un élément de sabot (12) qui peut coopérer avec ledit manchon extérieur (10b), ledit élément de sabot (12) pouvant être translaté de manière sélective (15, 17) par rapport aux pièces restantes dudit ensemble (11).

6. Machine selon l'une quelconque des revendications précédentes, **caractérisée en ce que** ladite formation de collier (10) est constituée d'un roulement qui inclut des bagues de roulement respectives interne (10a) et externe (10b), ladite bague de roulement externe (10b) définissant ledit manchon extérieur permettant de coopérer avec ledit ensemble (11) dans la transmission de poussée.

7. Machine selon l'une quelconque des revendications précédentes, caractérisé en ce ladite au moins une mâchoire (5) est installée comme une mâchoire thermosoudable pour le matériau d'emballage en feuille.

8. Machine selon l'une quelconque des revendications précédentes, **caractérisée en ce qu'**elle inclut une paire de mâchoires (5) montées (2) pour permettre le déplacement orbital respectif dans des positions diamétralement opposées autour dudit axe (X2).

9. Machine selon l'une quelconque des revendications précédentes, **caractérisée en ce qu'**elle inclut une paire de structures à rotation inverse (2), chacune supportant au moins une mâchoire (5) respective permettant ledit déplacement orbital, coordonnée, avec au moins une mâchoire correspondante (5) supportée par l'autre structure rotative (2) de la paire et complémentaire à celle-ci, dans laquelle, lorsque chacune desdites mâchoires (5) se déplace sur la partie rectiligne (7a) de son chemin orbital, son action sur l'élément d'engrènement (A) est simultanée et coordonnée à celle de l'au moins une mâchoire correspondante (5).
